# EUROPEAN PATENT SPECIFICATION

(11) **EP 2 734 946 B1**
(45) Date of publication and mention of the grant of the patent: **24.04.2019**
(21) Application number: 12814245.2
(22) Date of filing: 20.07.2012
(51) Int. Cl.: B29C 64/393

(54) **SYSTEMS AND METHODS FOR THREE DIMENSIONAL PRINTING**
SYSTEME UND VERFAHREN FÜR DREIDIMENSIONALES DRUCKEN
SYSTÈMES ET PROCÉDÉS D'IMPRESSION TRIDIMENSIONNELLE

(30) Priority: 20.07.2011 US 201161509769 P
(43) Date of publication of application: 28.05.2014
(73) Proprietor: Shapeways, Inc., New York, NY 10016 (US)
(72) Inventor: SCHOUWENBURG, Robert, D., Brooklyn, NY 11201 (US); HUDSON, Alan, D., Seattle WA 98122 (US)
(74) Representative: Boult Wade Tennant LLP
(86) International application number: PCT/US2012/047593
(87) International publication number: WO 2013/013146

(56) References cited:
- WO-A1-89/10256
- US-A1- 2011 087 350
- Eric Fickenscher: "Using Voxelization and Ray-Tracing to Identify Wall Thinness of Polygonal Models", , 1 December 2008 (2008-12-01), pages 1-46, XP055141319, Computing & Software Systems, Institute of Technology, University of Washington, Tacoma Retrieved from the Internet: URL:http://drupal1.tacoma.uw.edu/sites/def ault/files/global/documents/institute_tech /efickenscher.pdf [retrieved on 2014-09-18]
- FICKENSCHER USING VOXELIZATION AND RAY-TRACING TO IDENTIFY WALL THINNESS OF POLYGONAL MODELS December 2008, pages 1 - 46, XP055141319

## Description

### BACKGROUND

There exist methods for printing objects or models in three dimensions. There are printers that are capable of taking a 3D model as an input and building an actual physical representation of that model using a variety of materials. 3D printing generally involves creating a 3D object by laying down successive layers of material. 3D printing has become a useful method for rapid prototyping of models, across many technical disciplines. Because 3D models can be printed quickly and cheaply as compared to other techniques, 3D printing has quickly gained popularity.

Eric Fickenscher: "Using Voxelization and Ray-Tracing to Identify Wall Thinness of Polygonal Models", 1 December 2008, pages 1 - 46, Computing & Software Systems, Institute of Technology, University of Washington, Tacoma, discloses techniques using voxelization and ray-tracing to identify wall thinness of polygonal models. WO 89/10256 discloses a stereolithography system.

### SUMMARY

Current 3D printing techniques have problems accurately reproducing an object. In particular, it is appreciated that there may be aliasing problems in producing a particular object due to the minimum element size that can be supported by a particular 3D printer. These elements, referred to in the art as voxels, are volume elements that represent a value of volume in three dimensional space. Voxels are positioned together in three dimensional space by a 3D printer to represent a modeled object. Object artifacts that have a smaller size than the minimum element size supported by the 3D printer generally cannot be reproduced due to their small size and are generally not printed. Whether a detail of a particular model is printed or not relies on a number of factors, one of which includes an alignment of a voxel grid with the object. Also, depending on whether the voxel grid is shifted in one or more dimensions, certain details of the object could be printed or not.

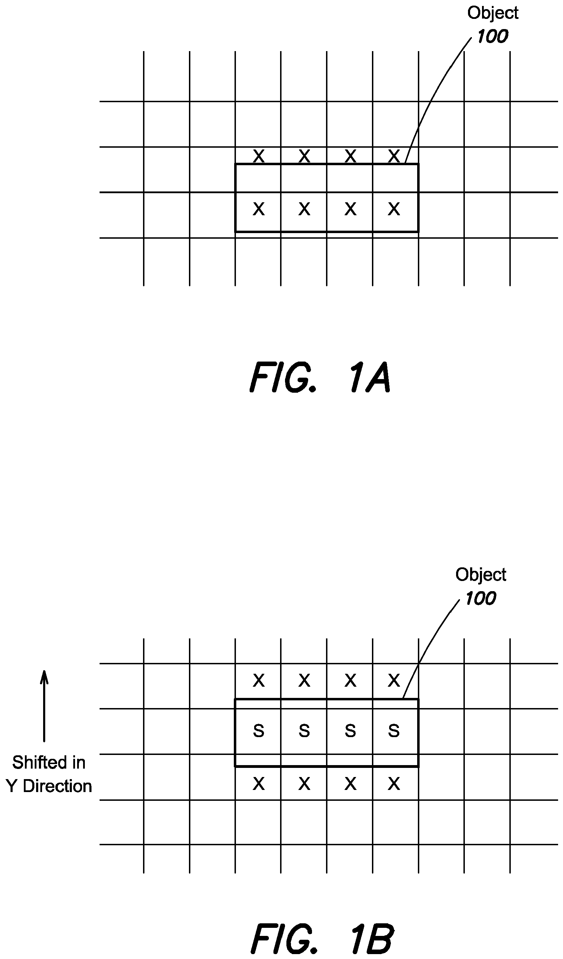

Figure 1A shows an object positioned in voxel space that may be modeled. In particular, Figure 1A shows an object 100 that, when modeled in voxel space with conventional voxelization techniques, suffers significant aliasing problems. In particular, as shown in Figure 1A, a typical voxelization technique will lose a feature of the object, as the object width of object 100 is less than the minimum voxel width. Thus, as shown, voxels within the two rows occupied by object 100 will be marked as unsafe (with an "x") and will not be rendered by a 3D printer as the features are less than the minimum printable width.

If object 100 is shifted slightly in the Y-direction so as to completely cover a series of voxels as is shown in Figure IB, object 100 becomes printable. Object 100 may be repositioned within the voxel grid in three dimensions so as to maximize the printable volume of the object.

However, it is appreciated that one problem with "shaking" the voxel grid in three dimensions includes the increased number of calculations desired to obtain the level of accuracy desired in the printed model. In a typical voxelization process, the grid may need to be adjusted from 11-27 gradations to get the level of accuracy desired. Because the problem is determined within 3D space, the solution requires 11³ (1,331) to 27³ (19,368) iterations of code. For systems that evaluate and print many models, such increased calculation complexity is time consuming and inefficient.

Also, when printing with some materials, there may be a minimum thickness that might be desired due to the strength of the material. That is, object thicknesses below a certain dimension may not be structurally strong enough when printed using a certain material type (e.g., metal, plastic, etc.). Thus, there is an advantage to having a process that can determine, for a particular model, whether the model can be printed to a 3D printer in a fast and efficient manner.

The invention provides a method and a system for printing a three-dimensional object as set out in claims 1 and 7.

Embodiments of the invention provide a method for determining quickly what areas of a modeled object can be printed. According to one embodiment, a method is provided that distinguishes from "features" of a model versus "details." For instance, when producing a model of a gun, a feature of the model may include some structural element, such as a trigger, while a detail may include ornamental features such as an ornamental design on the handle. In embodiments of the invention, it is appreciated that some details of a model may be omitted safely in a 3D print output, while portions of a model identified as features may not be printed without some defect in the output.

According to embodiments of the invention, prior to printing a model, voxels within the model are determined to be "safe" for printing or "unsafe." Rays are cast through the object to be printed, and safe voxels are determined as those that exceed a minimum thickness. In one embodiment, rays are cast in 3D orthogonal directions (e.g., x, y, and z dimensions) incrementally through the object, although it should be appreciated that more directions may be used to cast rays, some of which may not be orthogonal. Intersections with the object are sorted with respect to the distance from the cast point. The list of intersections is tracked, and the in/out state of each voxel with respect to the object is stored. When inside the object, the distance between two exterior points may be used to determine whether the distance exceeds the wall thickness. If it is determined that this distance exceeds the wall thickness, the exterior and interior voxels are marked as safe.

According to embodiments of the invention, a method is provided for determining whether a portion of the model is determined as being unprintable. This may be determined, in one implementation, by determining a ratio of unsafe voxels to the total number of voxels in the model. If the ratio of unsafe voxels is above a particular threshold, the model may be rejected and an indication may be provided to a user or process that the printed product may have some defect or may otherwise be unprintable (e.g., by a particular printer or certain material).

One or more regions of the object may be tested prior to printing to determine whether the particular region has difficulty in being printed. Unsafe voxels may be grouped into a region if the unsafe voxel borders another unsafe voxel. In a particular region, if a number of unsafe voxels in a particular region exceeds a certain number, that region may fail. A 3D model that contains a number of small regions may pass, while a model with a region above a certain threshold may fail. In one embodiment, it is appreciated that large volumes of unsafe voxels may be indicative of a feature that may not be printed rather than a detail.

According to one embodiment, a website is provided that permits users to upload models to be printed. In one embodiment, the models may be evaluated prior to printing including any of the methods and/or systems described herein. Once uploaded, the model may be evaluated and the user may be notified that a particular model or section of the model may be unprintable.

Embodiments provide a method for printing a three-dimensional (3D) object. The method comprises acts of positioning the 3D object in a voxel grid, casting a plurality of rays through a model of the 3D object to be printed, and for each ray, sorting a plurality of intersections with the 3D object by distance from a cast point of the respective ray. The method further comprises storing in/out state for each of the plurality of intersections and marking a plurality of voxels as safe voxels based on a wall thickness determined by the plurality of intersections.

According to one embodiment of the present invention, the method further comprises an act of determining whether a distance between two exterior points along at least one of the plurality of rays is above a minimum wall thickness. In another embodiment, the method further comprises an act of marking an exterior voxel and an adjacent interior voxel as safe if the distance between two exterior points along the at least one of the plurality of rays is above the minimum wall thickness.

In another embodiment, the act of casting comprises an act of casting the plurality of rays in three dimensional space. In another embodiment, the at least one duplicate point is caused by a ray hitting a vertex intersection. In another embodiment, the method further comprises an act of marking at least one voxel within a proximity of at least one other safe voxel as a safe voxel based on a measure of the proximity. In another embodiment, the method further comprises printing, by a 3D printer, a representation of the plurality of voxels marked as safe voxels.

In another embodiment, the method further comprises an act of determining a ratio of unsafe voxels to a total number of voxels representing the 3D object. In another embodiment, the method further comprises an act of comparing the ratio to a threshold value, and determining that the representation of the 3D object will not print correctly responsive to the act of comparing.

In another embodiment, the method further comprises an act of comparing the ratio to a threshold value, and prompt a user to review the model responsive to the act of comparing.

In another embodiment, the method further comprises an act of determining whether the 3D model is printable by a 3D printer. In another embodiment, the method further comprises an act of providing an indication responsive to the act of determining whether the 3D model is printable by the 3D printer.

Embodiments provide a system for printing a three-dimensional object, comprising a processor, and a memory operatively connected to the processor, the memory storing program instructions that when executed by the processor, includes one or more components adapted to carry out the method of appended claims 1 to 6.

According to one embodiment, the system further comprises a component adapted to determine whether a distance between two exterior points along at least one of the plurality of rays is above a minimum wall thickness. According to one embodiment, the system further comprises a component adapted to mark an exterior voxel and an adjacent interior voxel as safe if the distance between two exterior points along the at least one of the plurality of rays is above the minimum wall
thickness. According to one embodiment, the system further comprises a component adapted to cast the plurality of rays in three dimensional space.

According to one embodiment, the at least one duplicate point is caused by a ray hitting a vertex intersection. According to one embodiment, the system further comprises a component adapted to mark at least one voxel within a proximity of at least one other safe voxel as a safe voxel based on a measure of the proximity. According to one embodiment, the system further comprises a component adapted to print, by a 3D printer, a representation of the plurality of voxels marked as safe voxels.

According to one embodiment, the system further comprises a component adapted to determine a ratio of unsafe voxels to a total number of voxels representing the 3D object. According to one embodiment, the system further comprises a component adapted to compare the ratio to a threshold value, and determine that the representation of the 3D object will not print correctly responsive to the comparison. According to one embodiment, the system further comprises a component adapted to compare the ratio to a threshold value, and determine that the representation of the 3D object will print correctly responsive to the comparison.

According to one embodiment, the system further comprises a component adapted to compare the ratio to a threshold value, and prompt a user to review the model responsive to the comparison.

According to one embodiment, the system further comprises a component adapted to determine whether the 3D model is printable by a 3D printer. According to one embodiment, the system further comprises a component adapted to provide an indication responsive to the act of determining whether the 3D model is printable by the 3D printer. According to another aspect, a computer readable medium is provided, that when executed on a computer, performs a method for printing a 3D object.

### BRIEF DESCRIPTION OF THE FIGURES

Various aspects of at least one example are discussed below with reference to the accompanying figures, which are not intended to be drawn to scale. The figures are included to provide an illustration and a further understanding of the various aspects and examples, and are incorporated in and constitute a part of this specification, but are not intended as a definition of the limits of a particular example. The drawings, together with the remainder of the specification, serve to explain principles and operations of the described and claimed aspects and examples. In the figures, each identical or nearly identical component that is illustrated in various figures is represented by a like numeral. For purposes of clarity, not every component may be labeled in every figure. In the figures:
Figure 1A shows an object positioned in voxel space according to one embodiment of the present invention;
Figure 1B shows a shifted version of the object as shown in Figure 1A in voxel space according to one embodiment of the invention;
Figure 2A shows another example object positioned in voxel space according to one embodiment of the invention;
Figure 2B shows a shifted version of the object as shown in Figure 2A in voxel space according to one embodiment of the invention;
Figure 3A shows an example 3D object that may be modeled using various aspects of the present invention;
Figure 3B shows an example voxelization;
Figure 4 shows a process for modeling a 3D object according to one embodiment of the invention;
Figure 5 shows a process for evaluating a 3D model according to one embodiment of the invention;
Figure 6 shows another process for evaluating a 3D model according to one embodiment of the invention;
Figure 7 shows yet another process for evaluating a 3D model according to one embodiment of the invention;
Figure 8 shows a computer system in which various aspects of the present invention may be practiced;
Figure 9 shows a storage system that may be used with various embodiments;
Figure 10A shows a view of an object to be modeled according to one embodiment of the present invention;
Figure 10B shows another view of an object to be modeled according to one embodiment of the present invention;
Figure 10C shows a process where, based on the minimum wall thickness, all exterior voxels are found that could be unsafe;
Figure 10D shows a process for propagating safe voxels by 1 hop;
Figure 10E shows a visualization of an object where safe voxels are propagated to proximate voxels;
Figure 10F shows a visualization of an object where safe voxels are propagated to proximate voxels by a greater distance;

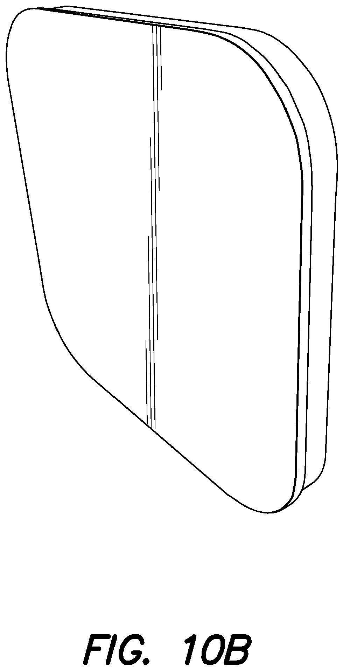

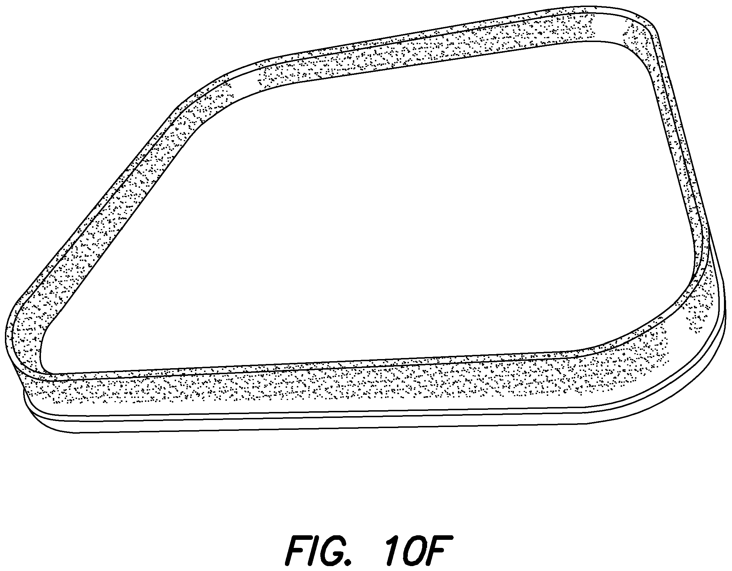

Figure 10F shows the object having a percentage of unsafe voxels above the threshold, and the model fails;

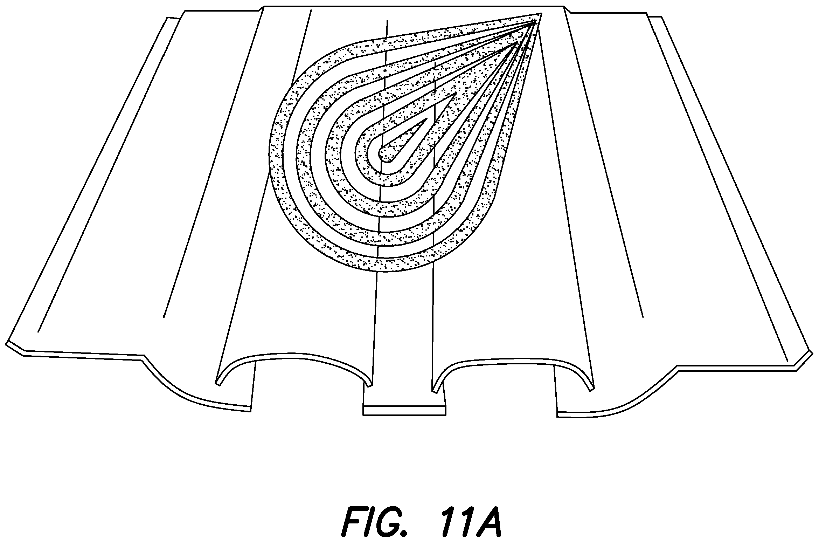

Figure 11A shows another example of an object to be modeled according to various embodiments of the present invention;

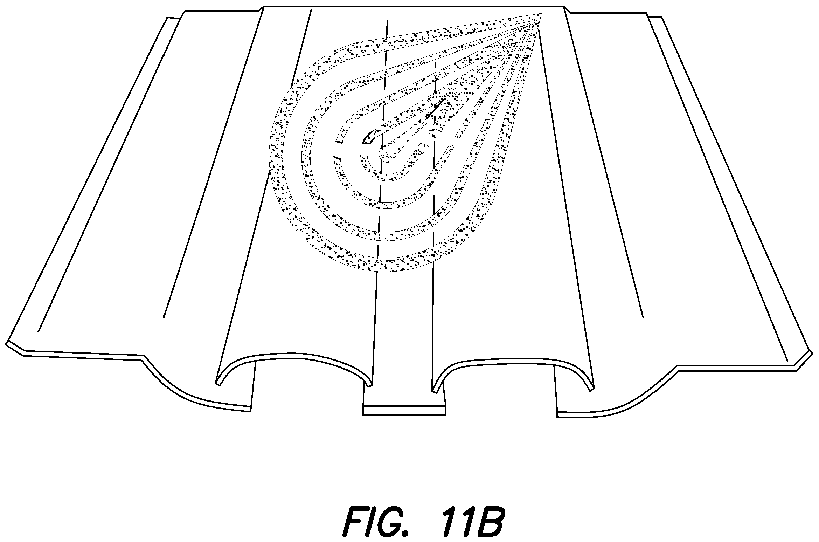

Figure 11B shows removal of some of the detail of the pattern in a calculation of whether the object is safe to print;

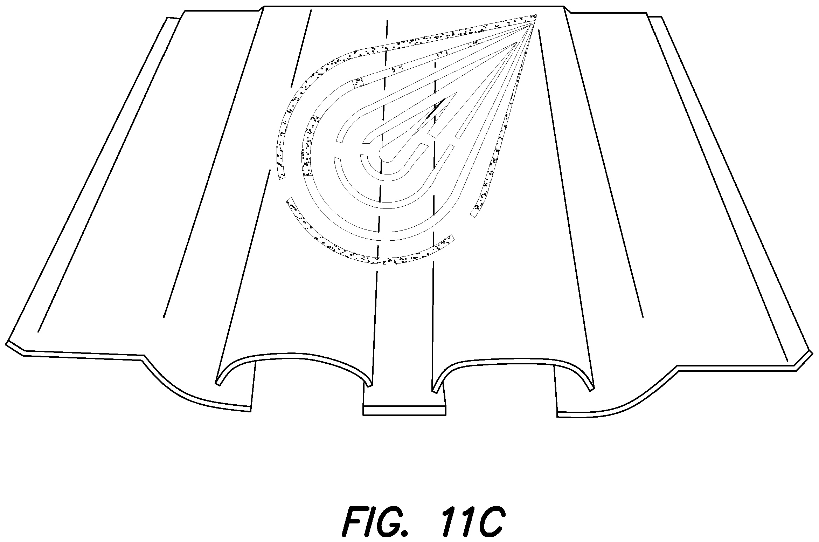

Figure 11C shows a restoration of a portion of the pattern when voxels are declared safe within a proximity of three; and

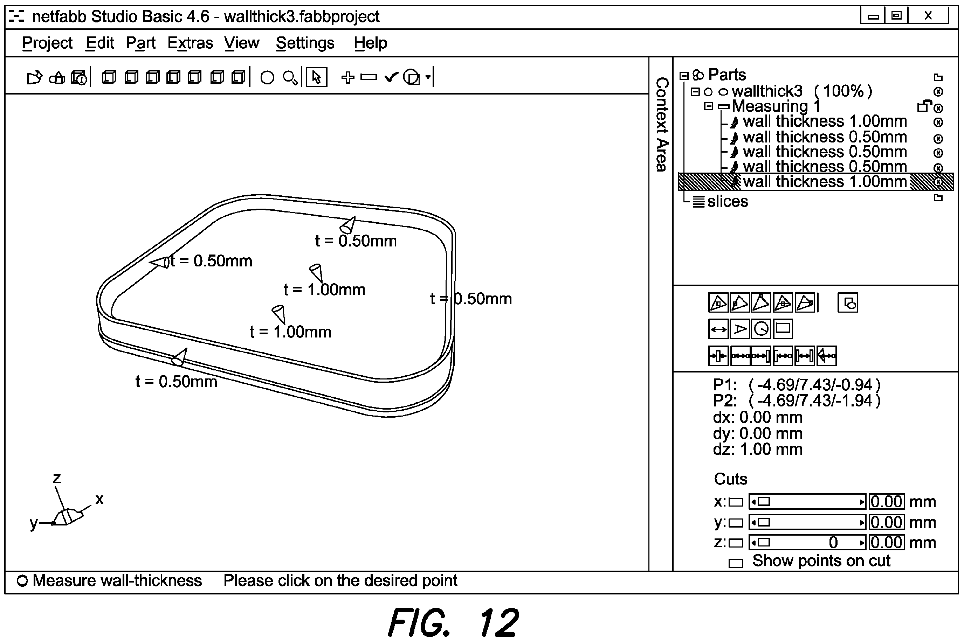

Figure 12 shows an example tool interface in which the object may be modeled.

### DETAILED DESCRIPTION

According to one embodiment, a modeling process is provided that identifies are of a 3D model that may have difficulty being printed on a 3D printer due to wall thickness. In particular, a modeling technique may be provided that identifies areas of a 3D model that are too thin to print with accuracy or may risk structural collapse. The process may include a voxelization of the input model, a ray casting technique that defines voxels that are interior to the model. Conventional modeling may include another step that classifies each voxel according to its distance from the "center" of its nearest interior wall.

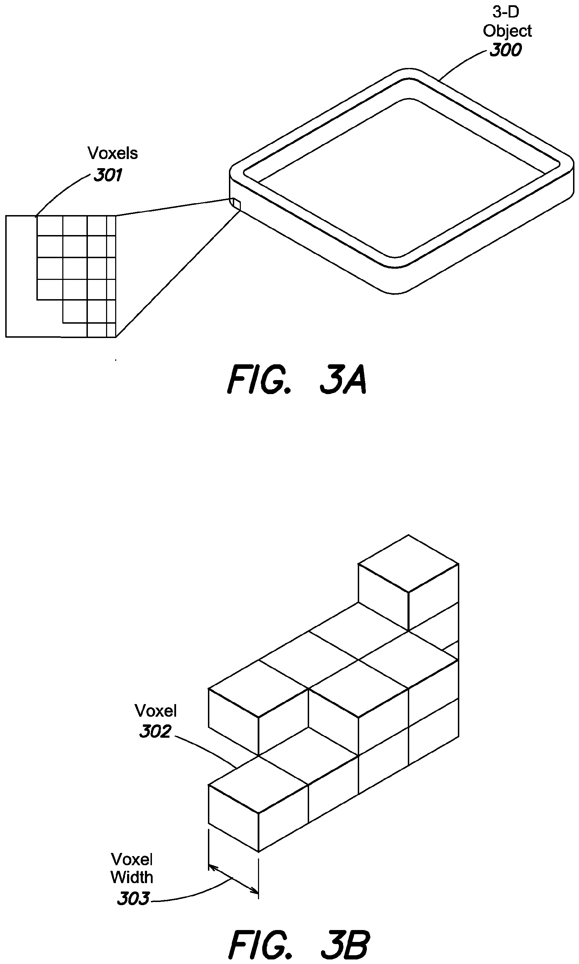

Just as a pixel represents a certain coordinate in 2-dimensional space, a voxel represents a certain coordinate in 3D space. For instance, as shown in Figure 3A, a 3D-object 300 may be modeled using a number of voxels 301 that are arranged in 3D voxel space to provide a representation of the object that could be printed on a 3D printer. Figure 3B shows a more detailed view of how voxels (e.g., voxel 302) could be arranged in 3D space.

A voxel width 303 may be on the order of 1 mm³ or smaller, given the available 3D printer resolutions that are available commercially. Voxelization is a process of representing objects as voxels. In particular, the model representation of the object is converted to a collection of voxels in voxel space, where the collection is an approximation of the modeled object. The smaller the voxel size, the more the collection becomes a true representation of the 3D object.

Ray tracing involves casting a ray at a 3D model and seeing how many times the ray touches a surface of the model. The intersection of the ray with the object indicates whether the point on the ray is in the interior or on the exterior surface of the object. For an object that has a ray cast with 8 intersections, the 1st intersection indicates a transition from an exterior surface of the object to the interior of the object, the 2nd intersection indicates a transition from the interior to the exterior, and so forth. Rays may be cast in orthogonal directions, but it should be appreciated that rays may be cast in any direction, and multiple rays may be cast at any amount of intervals.

As rays are cast, voxels are classified as interior to the model, exterior to the model, or on the surface of the model. A key observation when trying to calculate wall thickness is that voxels can be classified differently than is done in typical voxelization. Usually in voxelization code, interior/surface/exterior states are determined. As discussed above, this is generally performed using a ray-casting technique that counts intersections to determine whether, at any point in voxel space, whether the point is inside or outside the surface. Because this calculation is done in voxel space, the process suffers from aliasing problems. Further, as discussed above, the grid may need to be adjusted to obtain an optimal model, thus increasing the number of computations that are necessary.

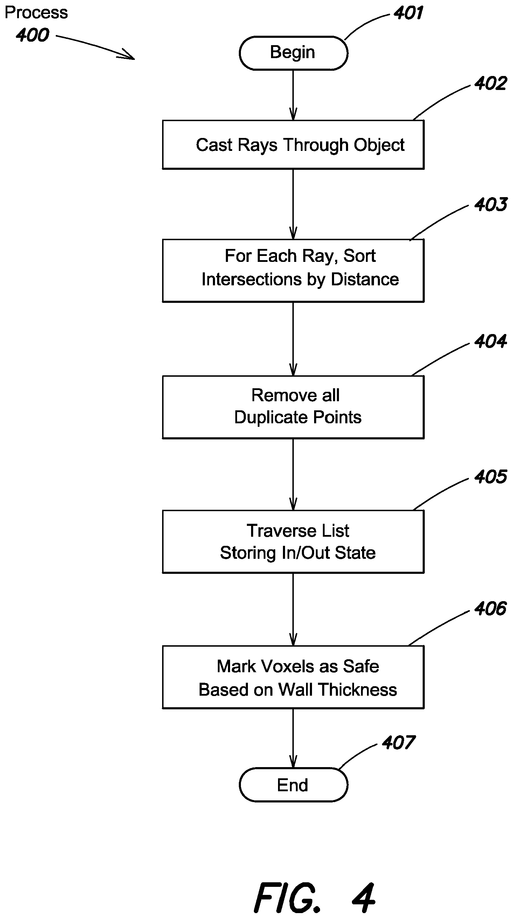

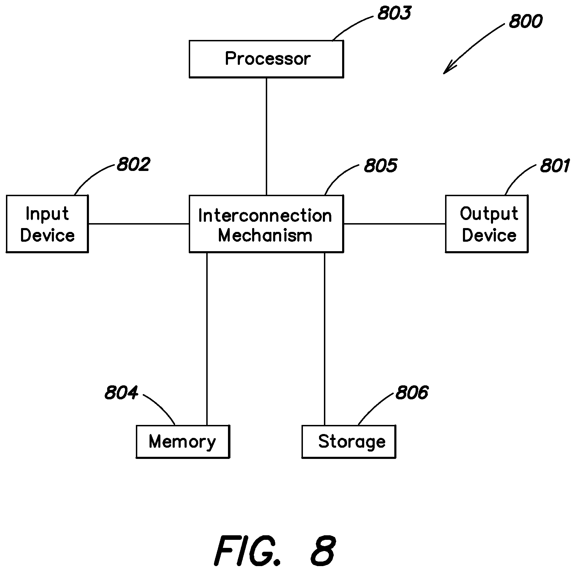

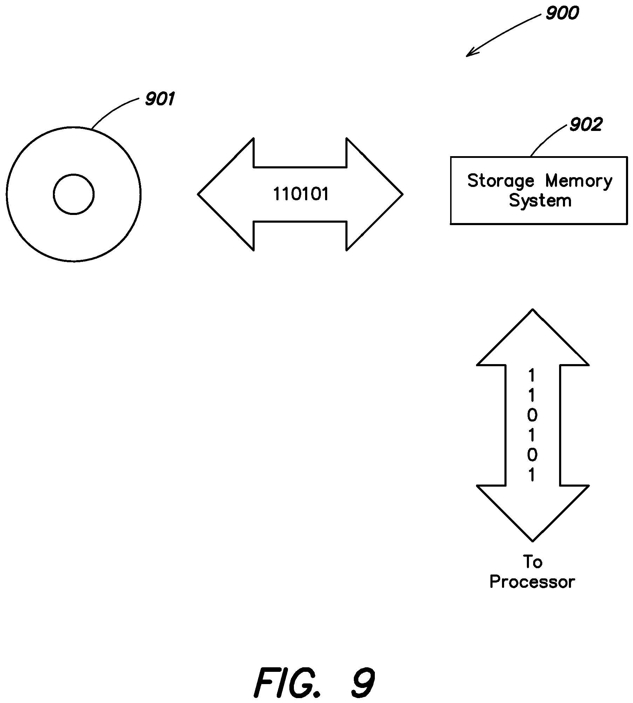

Figure 4 shows a process 400 modeling a 3D object according to one embodiment of the invention. Process 400 may be performed, for example, by one or more computer systems as discussed further below with respect to Figure 8 and 9. At block 401, process 400 begins. At block 402, rays are cast through the 3D object (e.g., object 300, object 200, etc.) in multiple dimensions. For each ray cast, the intersections with the object are sorted by distance from the cast point at block 403. Any duplicate points caused by rays hitting vertex intersections may be removed also at block 404.

At block 405, the list is traversed and in/out state is determined and stored as discussed above. When inside the object, the distance between two exterior points to exactly calculate whether the thickness is above the minimum wall thickness. The minimum wall thickness may be determined by the 3D printer capabilities, the nature of the substrate being used for printing, or both. If the thickness meets or exceeds the minimum wall thickness, the system marks the exterior voxels and the interior voxels between the exterior voxels as safe at block 406. At block 407, process 400 ends.

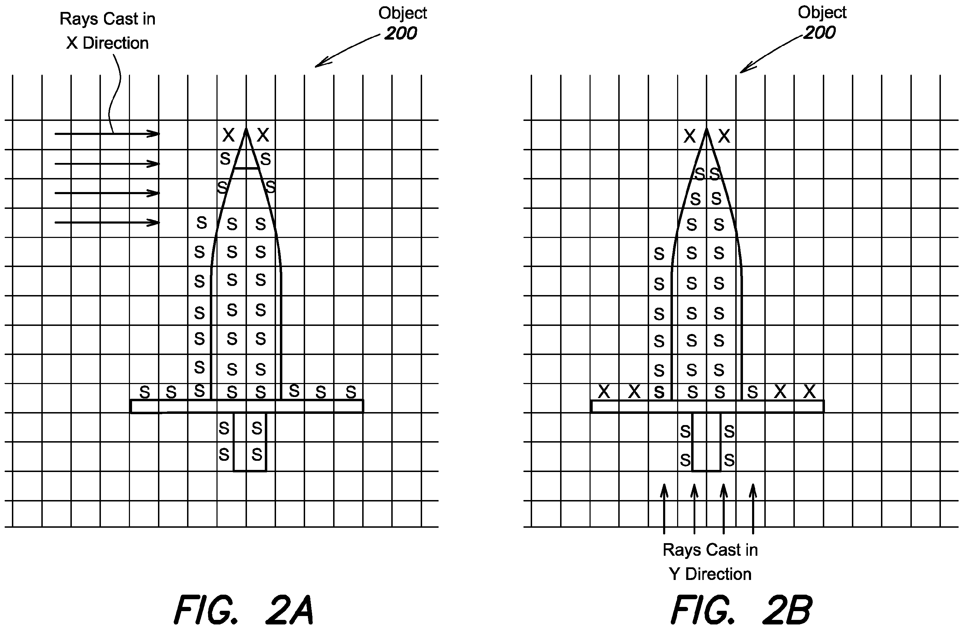

An example implementation of this is shown by way of example in Figures 2A-2B that may be performed using process 400. For instance, a sword object 200 is shown in voxel space, and horizontal rays are cast through object 200 in Figure 2A and vertical rays are cast through object 200 in Figure 2B. Transitions from exterior to interior are noted, and notably the distance between exterior points along the ray is used to determine whether the thickness exceeds the minimum wall thickness. By contrast with conventional voxelization methods, voxels are merely indicated as safe that are fully covered by the object in 3D voxel space. Thus, in the example shown in Figures 2A-2B, the material near the sword tip may be adequately reproduced, even though a conventional voxelization would omit the voxels marked "s" near the tip. In this case, for instance, as shown in Figure 2A, the distance calculated near the tip may be determined to exceed the minimum wall thickness, and therefore, the voxels included within the tip portion of the object are marked as safe.

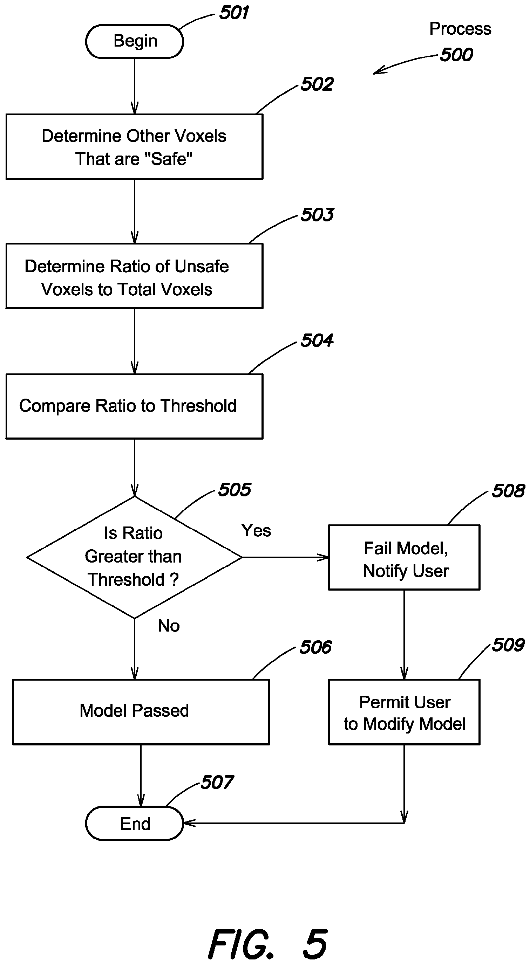

According to another aspect of the present invention, a process 500 is provided for evaluating a 3D model according to one embodiment of the invention as shown in Figure 5. In particular, process 500 may be used by an application or process to determine whether a particular model is printable by a 3D printer. It is appreciated that current voxelization techniques do not indicate whether an object is printable or not, depending on its model. Such a process 500 may be performed, for example, by a computer system, and/or may be part of a website that uploads and tests models provided by users.

At block 501, process 500 begins. At block 502, the model may be evaluated by a process to determine additional voxels in the model that may be declared "safe" based on their proximity to other safe voxels to improve the possibility that the model may be printed.

In one implementation, a voxel structure is stored so a follow-on analysis that classifies voxels as safe because they are proximate to other safe voxels. For instance, a process may be performed that includes the total number of non-exterior voxels, the number of safe voxels, the number of voxels that are safe due to proximity of other safe voxels, the number of voxels that are 'distance one' from a safe voxel, and the number of voxels that are 'distance two' from a safe voxel. Other processes may be used to declare voxels as safe, alone or in combination with other methods.

According to one aspect of the present invention, an evaluation of a model may be performed that determines (e.g., in block 503) a ratio of unsafe voxels to the total number of voxels (e.g., number of unsafe voxels / (safe voxels + unsafe voxels). A threshold may be determined and used to indicate whether the 3D object is printable. For instance, this threshold may derived empirically. In one example implementation, the ratio may be approximately 1-1.5%.

At block 504, an evaluating computer system may compare the determined ratio to the threshold. If the ratio is greater than the threshold (e.g., as determined at block 505), the model may be indicated as having failed (at block 508), as an unacceptable percentage of the voxels are determined to be unprintable by the printer. Optionally, a user or process may be notified of the failure. For instance, a tool may be provided that visually indicates the failure of the model to the user. Also, the tool may include an interface that indicates what portions of the model (and thus groups of voxels) are unsafe. The user or other process may be permitted to modify the model at block 509. For instance, unsafe voxels may be thickened, or the user may be permitted to override the failure as the unsafe voxels may be deemed as details that need not be printed. If, at block 505, it is determined that the ratio is less than the threshold, the model is passed at block 506, and process 500 ends at block 507.

Because unsafe voxels may generally located more than a proximate distance away from safe voxels, these voxels may be determined as primarily as features. For instance, if there is a process that computes other safe voxels at a proximity of 1 voxel, the unsafe voxels may be determined as primarily features (i.e., the elements of the model that the user would not want deleted). If there are too many features in indicated as unsafe, the model may be rejected.

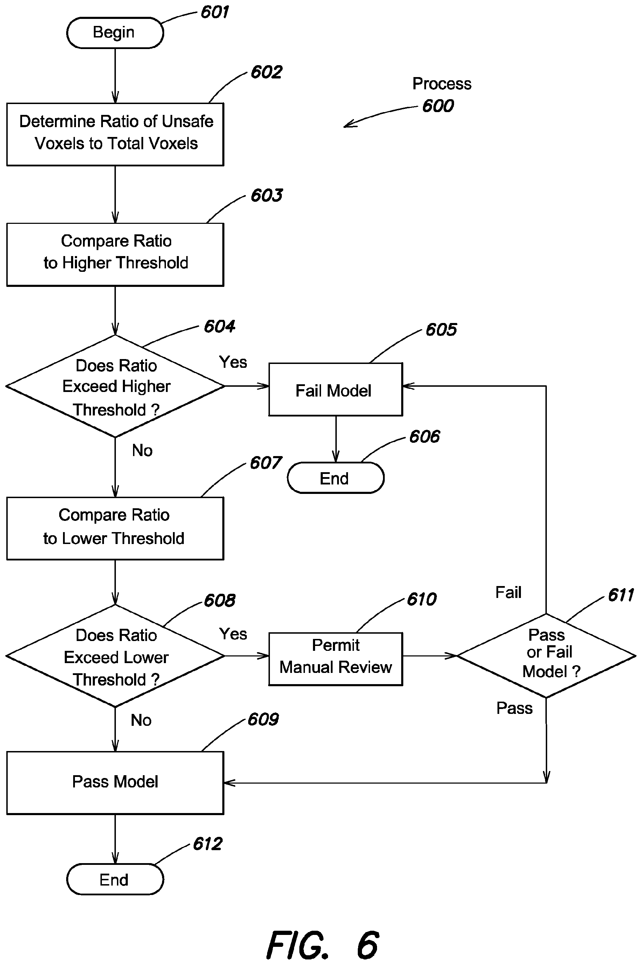

According to another embodiment as shown in Figure 6, a process 600 may be provided that is used to evaluate a 3D model according to one embodiment of the invention. In particular, process 600 may use more than one state to assess a particular model. For instance, there may be three states for a particular model:
ACCEPT - the model is accepted
REJECT - the model is rejected
MANUALLY REVIEW - the model may be manually reviewed to modify the model and/or override rejection of the model

At block 601, process 600 begins. At block 602, a system determines a ratio of unsafe voxels to the total number of voxels as discussed above with reference to Figure 5. At block 603, the system compares the ratio to a higher threshold. For example, a higher threshold may be chosen, above which the model will be automatically rejected. If, at block 604, it is determined that the ratio exceeds the higher threshold, the model is indicated as failed at block 605, and process 600 ends at block 606.

If the ratio does not exceed the higher threshold, the ratio is compared to a lower threshold. In one example implementation, values of the ratio below a certain value (e.g., a lower threshold) may always be accepted, and the model may be indicated as having been accepted. Those above the lower threshold but below the upper threshold may be designated by the system for human review and/or modification of the model. For instance, at block 608, if it is determined that the ratio does not exceed the lower threshold, the model is passed at block 609, and process 600 ends at block 612. However, if the ratio does exceed the lower threshold, the system may permit manual review and/or modification of the model at block 610. Optionally, the user may be permitted to retest the model and/or manually pass or fail the model at block 611.

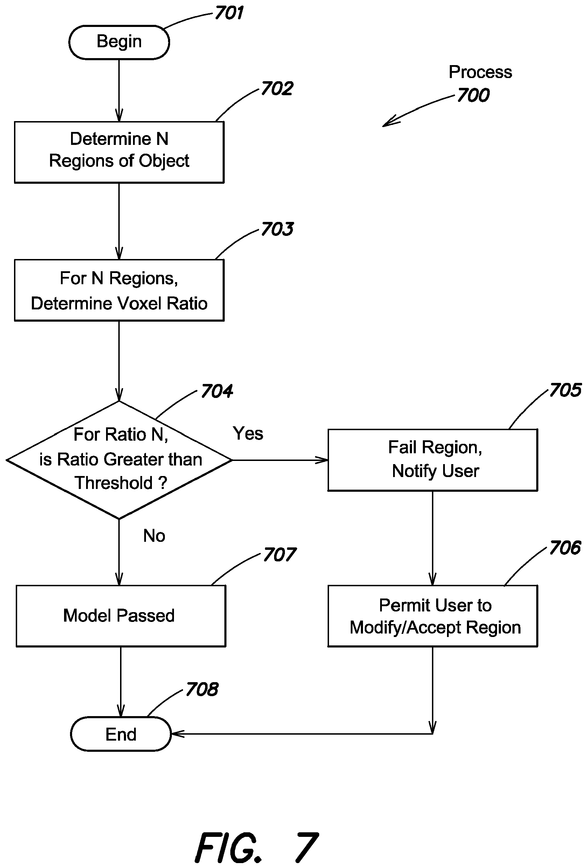

In yet another embodiment of a method for evaluating a model as shown in Figure 7, a process 700 is provided that evaluates a region of the model. This evaluation may be performed in addition to or alternative to the overall model evaluation described above with respect to Figure 5. For instance, in one implementation, the process may use volumes of unsafe regions. Instead of relying on a percentage of voxels of the overall model, voxels that create the model may be grouped by regions. Unsafe voxels may be grouped into a region if the voxel touches another unsafe voxel. According to one embodiment, the number of voxels in a particular region may be used to fail a model and/or that particular region. For instance, a 3D model that contains many small regions may pass while a model with a region above a threshold will fail. In this case, large volumes of unsafe voxels likely determines a feature rather than a detail of the object.

At block 701, process 700 begins. At block 702, the system determines a number of regions N of the modeled object. This may be performed, for example, automatically by a system that divides the object into N regions, or otherwise identifies similarities between voxels and groups.

For instance, in one example, voxels that are contiguous yet are all marked unsafe may be classified as a region (e.g., a thin lip of a can that is less than the printable wall thickness). For N regions, it is determined at block 703 what the voxel ratio of unsafe voxels to the total number of voxels for the particular region. For the ratio for region N, if it is determined that the ratio is greater than a threshold, the region and/or overall model may be indicated as failed (e.g., at block 705). At block 706, the system may permit the user to modify the model or otherwise accept the region.

If the ratio is less than the threshold for the particular regoin, then the region may be passed at block 707. The process may continue to evaluate other regions of the model, and if passed, the overall model may be indicated as having passed. At block 708, process 700 ends.

### Example Computer Implementations

Processes and methods associated with various embodiments, acts thereof and various embodiments and variations of these methods and acts, individually or in combination, may be defined by computer-readable signals tangibly embodied on a computer-readable medium, for example, a non-volatile recording medium, an integrated circuit memory element, or a combination thereof. According to one embodiment, the computer-readable medium may be non-transitory in that the computer-executable instructions may be stored permanently or semi-permanently on the medium. Such signals may define instructions, for example, as part of one or more programs, that, as a result of being executed by a computer, instruct the computer to perform one or more of the methods or acts described herein, and/or various embodiments, variations and combinations thereof. Such instructions may be written in any of a plurality of programming languages, for example, Java, Visual Basic, C, C#, or C++, Fortran, Pascal, Eiffel, Basic, COBOL, etc., or any of a variety of combinations thereof. The computer-readable medium on which such instructions are stored may reside on one or more of the components of a general-purpose computer described above, and may be distributed across one or more of such components.

The computer-readable medium may be transportable such that the instructions stored thereon can be loaded onto any computer system resource to implement the aspects of the present invention discussed herein. In addition, it should be appreciated that the instructions stored on the computer-readable medium, described above, are not limited to instructions embodied as part of an application program running on a host computer. Rather, the instructions may be embodied as any type of computer code (e.g., software or microcode) that can be employed to program a processor to implement the above-discussed aspects of the present invention.

Various embodiments according to the invention may be implemented on one or more computer systems. These computer systems may be, for example, general-purpose computers such as those based on Intel PENTIUM-type processor, Motorola PowerPC, Sun UltraSPARC, Hewlett-Packard PA-RISC processors, or any other type of processor. It should be appreciated that one or more of any type computer system may be used to partially or fully automate play of the described game according to various embodiments of the invention. Further, the software design system may be located on a single computer or may be distributed among a plurality of computers attached by a communications network.

The computer system may include specially-programmed, special-purpose hardware, for example, an application-specific integrated circuit (ASIC). Aspects of the invention may be implemented in software, hardware or firmware, or any combination thereof. Further, such methods, acts, systems, system elements and components thereof may be implemented as part of the computer system described above or as an independent component.

A computer system may be a general-purpose computer system that is programmable using a high-level computer programming language. Computer system may be also implemented using specially programmed, special purpose hardware. In a computer system there may be a processor that is typically a commercially available processor such as the well-known Pentium class processor available from the Intel Corporation. Many other processors are available. Such a processor usually executes an operating system which may be, for example, the Windows NT, Windows 2000 (Windows ME), Windows XP, Windows Vista or Windows 7 operating systems available from the Microsoft Corporation, MAC OS Snow Leopard, MAC OS Snow Lion operating systems available from Apple Computer, the Solaris Operating System available from Sun Microsystems, or UNIX available from various sources. Many other operating systems may be used.

The processor and operating system together define a computer platform for which application programs in high-level programming languages are written. It should be understood that the invention is not limited to a particular computer system platform, processor, operating system, or network. Also, it should be apparent to those skilled in the art that the present invention is not limited to a specific programming language or computer system. Further, it should be appreciated that other appropriate programming languages and other appropriate computer systems could also be used.

One or more portions of the computer system may be distributed across one or more computer systems coupled to a communications network. These computer systems also may be general-purpose computer systems. For example, various aspects of the invention may be distributed among one or more computer systems configured to provide a service (e.g., servers) to one or more client computers, or to perform an overall task as part of a distributed system. For example, various aspects of the invention may be performed on a client-server system that includes components distributed among one or more server systems that perform various functions according to various embodiments of the invention. These components may be executable, intermediate (e.g., IL) or interpreted (e.g., Java) code which communicate over a communication network (e.g., the Internet) using a communication protocol (e.g., TCP/IP). Components may also be distributed in a cloud-based computing system as is known in the art.

It should be appreciated that the invention is not limited to executing on any particular system or group of systems. Also, it should be appreciated that the invention is not limited to any particular distributed architecture, network, or communication protocol.

Various embodiments of the present invention may be programmed using an object-oriented programming language, such as SmallTalk, Java, C++, Ada, or C# (C-Sharp). Other object-oriented programming languages may also be used. Alternatively, functional, scripting, and/or logical programming languages may be used. Various aspects of the invention may be implemented in a non-programmed environment (e.g., documents created in HTML, XML or other format that, when viewed in a window of a browser program, render aspects of a graphical-user interface (GUI) or perform other functions). Various aspects of the invention may be implemented as programmed or non-programmed elements, or any combination thereof.

Further, on each of the one or more computer systems that include one or more components of website 100, each of the components may reside in one or more locations on the system. For example, different portions of the components of website 100 may reside in different areas of memory (e.g., RAM, ROM, disk, etc.) on one or more computer systems. Each of such one or more computer systems may include, among other components, a plurality of known components such as one or more processors, a memory system, a disk storage system, one or more network interfaces, and one or more busses or other internal communication links interconnecting the various components.

Any number of systems of the website described herein may be implemented on a computer system described below in relation to Figs. 7 and 8. In particular, FIG. 8 shows an example computer system 800 used to implement various aspects. FIG. 9 shows an example storage system that may be used.

System 800 is merely an illustrative embodiment of a computer system suitable for implementing various aspects of the invention. Such an illustrative embodiment is not intended to limit the scope of the invention, as any of numerous other implementations of the system, for example, are possible and are intended to fall within the scope of the invention. For example, a virtual computing platform may be used.

Various embodiments according to the invention may be implemented on one or more computer systems. These computer systems may be, for example, general-purpose computers such as those based on Intel PENTIUM-type processor, Motorola PowerPC, Sun UltraSPARC, Hewlett-Packard PA-RISC processors, or any other type of processor. It should be appreciated that one or more of any type computer system may be used to partially or fully automate analysis, modification and printing of 3D models according to various embodiments of the invention. Further, the system may be located on a single computer or may be distributed among a plurality of computers attached by a communications network.

For example, various aspects of the invention may be implemented as specialized software executing in a general-purpose computer system 800 such as that shown in Figure 8. The computer system 800 may include a processor 803 connected to one or more memory devices 804, such as a disk drive, memory, or other device for storing data. Memory 804 is typically used for storing programs and data during operation of the computer system 800. Components of computer system 800 may be coupled by an interconnection mechanism 805, which may include one or more busses (e.g., between components that are integrated within a same machine) and/or a network (e.g., between components that reside on separate discrete machines). The interconnection mechanism 805 enables communications (e.g., data, instructions) to be exchanged between system components of system 800. Computer system 800 also includes one or more input devices 802, for example, a keyboard, mouse, trackball, microphone, touch screen, and one or more output devices 801, for example, a printing device, display screen, and/or speaker. In addition, computer system 800 may contain one or more interfaces (not shown) that connect computer system 800 to a communication network (in addition or as an alternative to the interconnection mechanism 805).

The storage system 806, shown in greater detail in FIG. 9, typically includes a computer readable and writeable nonvolatile recording medium 901 in which signals are stored that define a program to be executed by the processor or information stored on or in the medium 901 to be processed by the program. The medium may, for example, be a disk or flash memory. Typically, in operation, the processor causes data to be read from the nonvolatile recording medium 901 into another memory 902 that allows for faster access to the information by the processor than does the medium 901. This memory 902 is typically a volatile, random access memory such as a dynamic random access memory (DRAM) or static memory (SRAM). It may be located in storage system 806, as shown, or in memory system 804, not shown. The processor 803 generally manipulates the data within the integrated circuit memory 804, 902 and then copies the data to the medium 901 after processing is completed. A variety of mechanisms are known for managing data movement between the medium 901 and the integrated circuit memory element 804, 902, and the invention is not limited thereto. The invention is not limited to a particular memory system 804 or storage system 806.

The computer system may include specially-programmed, special-purpose hardware, for example, an application-specific integrated circuit (ASIC). Aspects of the invention may be implemented in software, hardware or firmware, or any combination thereof. Further, such methods, acts, systems, system elements and components thereof may be implemented as part of the computer system described above or as an independent component.

Although computer system 800 is shown by way of example as one type of computer system upon which various aspects of the invention may be practiced, it should be appreciated that aspects of the invention are not limited to being implemented on the computer system as shown in FIG. 8. Various aspects of the invention may be practiced on one or more computers having a different architecture or components that that shown in FIG. 8.

Computer system 800 may be a general-purpose computer system that is programmable using a high-level computer programming language. Computer system 800 may be also implemented using specially programmed, special purpose hardware. In computer system 800, processor 803 is typically a commercially available processor such as the well-known Pentium, Core, Core Vpro, Xeon, or Itanium class processors available from the Intel Corporation. Many other processors are available. Such a processor usually executes an operating system which may be, for example, the Windows NT, Windows 2000 (Windows ME), Windows XP, Windows Vista or Windows 7 operating systems available from the Microsoft Corporation, MAC OS Snow Leopard, MAC OS Snow Lion operating systems available from Apple Computer, the Solaris Operating System available from Sun Microsystems, or UNIX available from various sources. Many other operating systems may be used.

The processor and operating system together define a computer platform for which application programs in high-level programming languages are written. It should be understood that the invention is not limited to a particular computer system platform, processor, operating system, or network. Also, it should be apparent to those skilled in the art that the present invention is not limited to a specific programming language or computer system. Further, it should be appreciated that other appropriate programming languages and other appropriate computer systems could also be used.

One or more portions of the computer system may be distributed across one or more computer systems (not shown) coupled to a communications network. These computer systems also may be general-purpose computer systems. For example, various aspects of the invention may be distributed among one or more computer systems configured to provide a service (e.g., servers) to one or more client computers, or to perform an overall task as part of a distributed system. For example, various aspects of the invention may be performed on a client-server system that includes components distributed among one or more server systems that perform various functions according to various embodiments of the invention. These components may be executable, intermediate (e.g., IL) or interpreted (e.g., Java) code which communicate over a communication network (e.g., the Internet) using a communication protocol (e.g., TCP/IP).

It should be appreciated that the invention is not limited to executing on any particular system or group of systems. Also, it should be appreciated that the invention is not limited to any particular distributed architecture, network, or communication protocol.

Various embodiments of the present invention may be programmed using an object-oriented programming language, such as SmallTalk, Java, C++, Ada, or C# (C-Sharp). Other object-oriented programming languages may also be used. Alternatively, functional, scripting, and/or logical programming languages may be used. Various aspects of the invention may be implemented in a non-programmed environment (e.g., documents created in HTML, XML or other format that, when viewed in a window of a browser program, render aspects of a graphical-user interface (GUI) or perform other functions). Various aspects of the invention may be implemented using various Internet technologies such as, for example, the well-known Common Gateway Interface (CGI) script, PHP Hyper-text Preprocessor (PHP), Active Server Pages (ASP), HyperText Markup Language (HTML), Extensible Markup Language (XML), Java, JavaScript, Asynchronous JavaScript and XML (AJAX), Flash, and other programming methods. Further, various aspects of the present invention may be implemented in a cloud-based computing platform, such as the well-known EC2 platform available commercially from Amazon.com, Seattle, WA, among others. Various aspects of the invention may be implemented as programmed or non-programmed elements, or any combination thereof.

### Example Interfaces

According to various aspects of the present invention, one or more interface tools may be provided to a user to visualize the model. One advantage of such a tool may permit a user to visualize the object model and to view problem areas of the object that may have issues in printing. Other features may permit the user to modify, review and/or accept problem areas of the model prior to printing.

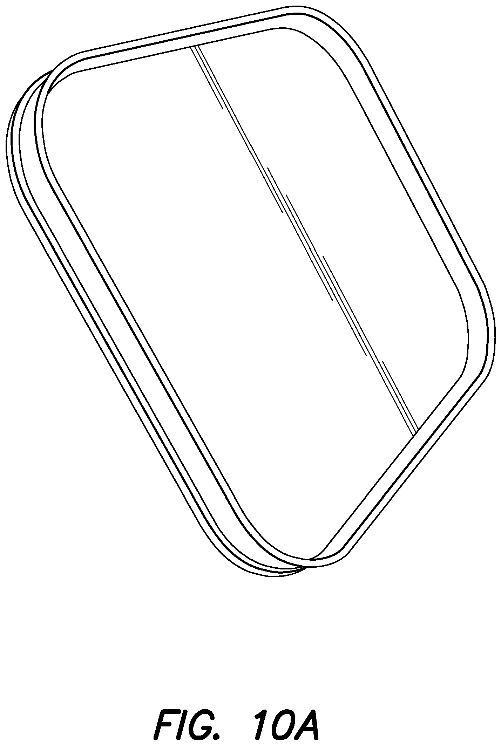

Figures 10A-10B show views of an example object to be modeled. Figure 12 shows one example interface in which the model may be viewed, modified and printed. For instance, a software program may be used to model and test the 3D object. Users may upload models to an evaluation program in one or more formats (e.g., X3D, COLLADA or STL file, among others). The model may be printed in a variety of materials including, but not limited to, acrylic-based photopolymers, stainless steel, sandstone, glass, alumide, among others. In one example shown, the object may be printed using a particular material and printer that a minimum wall thickness of 0.7 mm. Figure 12 shows the base of the object having a 1 mm thickness and the sides having 0.5 mm. Notably, the sides are too small to print accurately using a wall thickness of 0.7 mm.

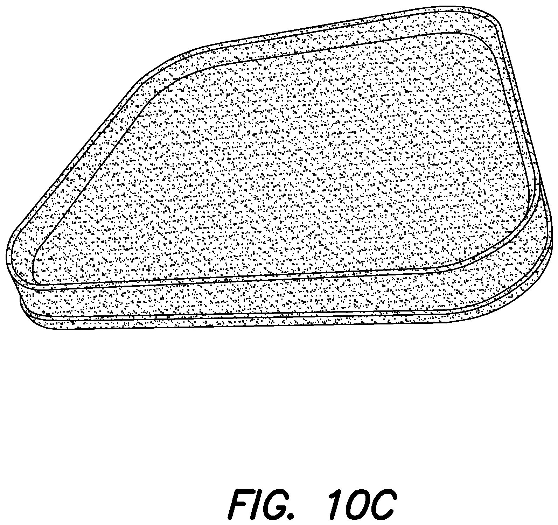

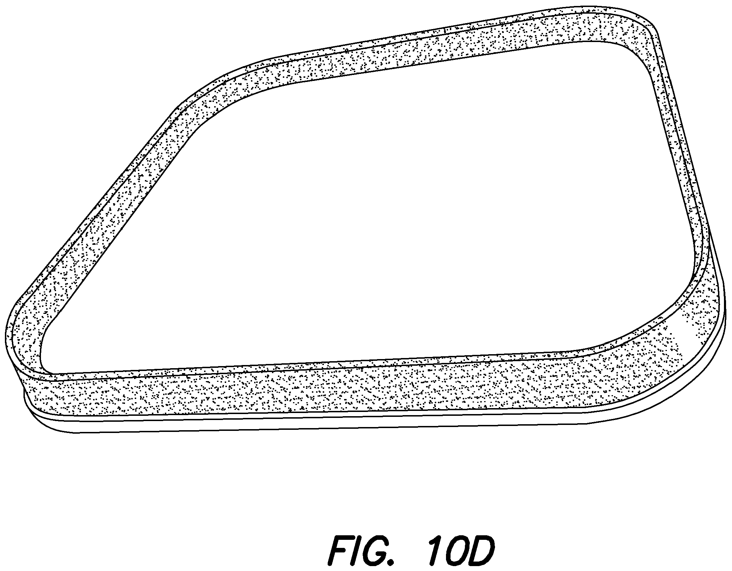

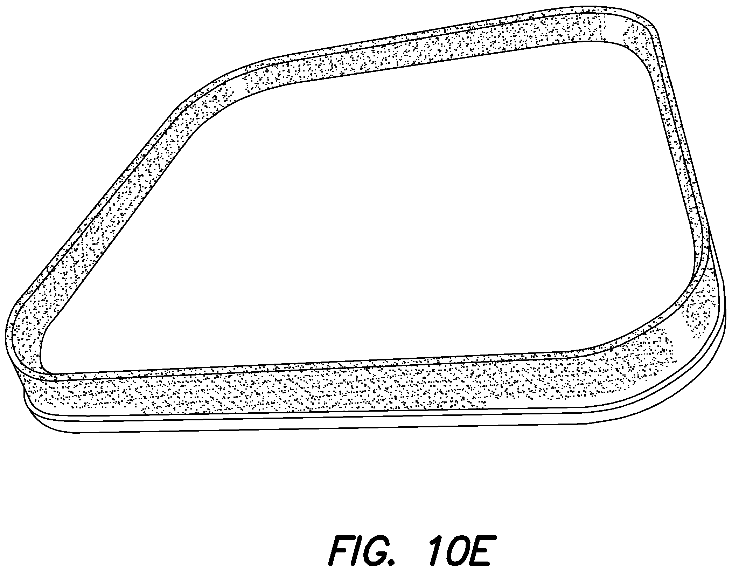

Figure 10C shows a process where, based on the minimum wall thickness, all exterior voxels are found that could be unsafe (as shown in the Figure by shading). In Figure 10D, rays are cast through the object and all voxels are marked as safe which have a region of safe voxels which are greater than or equal to the minimum wall thickness. Thus, based on the dimensions of the object, vertical rays that hit the bottom of the object find a 1 mm thickness of the base, and therefore all of the bottom voxels are determined to be safe as indicated in Figure 10E. In one implementation, all three axes (e.g., x, y, and z) must agree for a particular voxel to be safe.

When the process casts rays against the sides of the object, the vertical direction of the object is fine (and safe). However, rays cast in the x direction find a 0.5 mm thickness which is less than the minimum thickness 0.7 mm. Thus, because these voxels are less than the minimum thickness in at least one dimension, the process marks those voxels as unsafe.

Figure 10D shows a process for propagating safe voxels by 1 hop. That is, voxels that have a neighbor (e.g., voxels within a proximity of 1 of a safe voxel) that is safe are also marked as safe. This may be done, for example, by a process that marks unsafe voxels as safe that are proximate to other safe voxels as discussed above. Figure 10E shows a visualization where safe voxel are propagated further, increasing the printable area. Figure 10F shows a visualization of the object indicating unsafe voxels that remain. In one implementation, the system may determine the percentage of unsafe voxels to the total number of voxels and indicate that the object shown in Figure 10F has failed, and thus is rejected for printing.

One aspect of a tool may permit the user to visualize problem areas of the model. In one implementation, the visualization includes visual cues (e.g., colors, shading, identifiers) that indicate particular voxels or regions of voxels that are unsafe (e.g., ones where the thickness is below the minimum wall thickness). Other cues may be chosen that indicate those voxels or regions of voxels that are safe, and therefore can be safely printed. Further cues may indicate, within the visual representation of the model, what voxels were indicated as safe due to their proximity to other safe voxels.

Another aspect of a visual tool may include a feature that automatically fixes certain portions of the model that do not exceed the minimum wall thickness. In one embodiment, the system may identify voxels or regions of voxels that are unsafe (e.g., as indicated in the model), and the process may add material to those areas in order to meet the minimum wall thickness. For instance, the process may add safe voxels to areas indicated as unsafe.

Figure 11A shows another example of an object to be modeled. In particular, the object shown in Figure 11A has a printable body with a pattern positioned on the top of the body. The pattern has a thickness that is below the printable wall thickness as discussed above. Using a process that determines safe voxels based on thickness and marks unsafe voxels as safe that are proximate to other safe voxels within one (1) voxel, the Figure 11B shows that some of the detail of the pattern is removed in a calculation of whether the object is safe to print. Notably, the process distinguishes between details and features of the object, and the user may be left to decide whether the object should be printed without the unsafe pattern. Figure 11C shows what happens to the pattern when voxels are declared safe within a proximity of three (3), which makes more of the detail safe and therefore printable. The user may be permitted to adjust this proximity to print more or less detail. Although some of the detail may be lost, the loss of some detail may be acceptable.

## Claims

1. A method for printing a three-dimensional (3D) object (100, 200, 300), the method comprising acts of:
positioning the 3D object in a voxel grid;
casting (402) a plurality of rays through a model of the 3D object to be printed;
for each ray, sorting (403) a plurality of intersections with the 3D object by distance from a cast point of the respective ray;
removing (404) all of a plurality of duplicate points of the plurality of intersections;
storing (405) in/out state for each of the plurality of intersections;
marking a plurality of voxels as safe voxels where wall thickness determined by the plurality of intersections meets or exceeds a minimum wall thickness;
determining (503), for at least a portion of a representation of the 3D object, a ratio of unsafe voxels to a total number of voxels within the at least one portion of the representation of the 3D object;
comparing (504) the ratio to a threshold value; and
determining that the portion of the representation of the 3D object will not print correctly responsive to the act of comparing.

2. The method according to claim 1, wherein marking a plurality of voxels as safe voxels comprises acts of determining whether a distance between two exterior points along at least one of the plurality of rays is above a minimum wall thickness.

3. The method according to claim 2, further comprising an act of marking an exterior voxel and an adjacent interior voxel as safe if the distance between two exterior points along the at least one of the plurality of rays is above the minimum wall thickness.

4. The method according to any preceding claim, wherein at least one of the plurality of duplicate points is caused by a ray hitting a vertex intersection.

5. The method according to any preceding claim, further comprising acts of marking at least one voxel within a proximity of at least one other safe voxel as a safe voxel based on a measure of the proximity.

6. The method according to any preceding claim, further comprising printing, by a 3D printer, a representation of the plurality of voxels marked as safe voxels.

7. A system for printing a three-dimensional object, the system comprising:
a processor (803);
a memory (804) operatively connected to the processor, the memory storing program instructions that when executed by the processor, includes one or more components adapted to carry out the method of any preceding claim.

## Patentansprüche

1. Verfahren zum Drucken eines dreidimensionalen (3D-)Objekts (100, 200, 300), wobei das Verfahren die folgenden Handlungen umfasst:
Positionieren des 3D-Objekts in einem Voxel-Raster;
Projizieren (402) einer Vielzahl von Strahlen auf ein Modell des zu druckenden 3D-Objekts;
für jeden Strahl Sortieren (403) einer Vielzahl von Schnittpunkten mit dem 3D-Objekt nach dem Abstand von einem Projektionspunkt des jeweiligen Strahls;
Entfernen (404) aller einer Vielzahl von Duplikatpunkten der Vielzahl von Schnittpunkten;
Speichern (405) des In/Out-Zustandes für jede der Vielzahl von Kreuzungen;
Markieren einer Vielzahl von Voxeln als sichere Voxel, wobei die Wanddicke, die durch die Vielzahl von Kreuzungen bestimmt wird, eine minimale Wanddicke erreicht oder überschreitet; Bestimmen (503) eines Verhältnisses von unsicheren Voxeln zu einer Gesamtzahl von Voxeln innerhalb des mindestens einen Abschnitts der Darstellung des 3D-Objekts für mindestens einen Abschnitt einer Darstellung des 3D-Objekts;
Vergleichen (504) des Verhältnisses mit einem Schwellenwert; und
Bestimmen, als Reaktion auf die Vergleichshandlung, dass der Abschnitt der Darstellung des 3D-Objekts nicht korrekt gedruckt wird.

2. Verfahren nach Anspruch 1, wobei das Markieren einer Vielzahl von Voxeln als sichere Voxel Handlungen des Bestimmens umfasst, ob ein Abstand zwischen zwei äußeren Punkten entlang von mindestens einem der Vielzahl von Strahlen über einer minimalen Wanddicke liegt.

3. Verfahren nach Anspruch 2, ferner umfassend eine Handlung des Markierens eines äußeren Voxels und eines benachbarten inneren Voxels als sicher, wenn der Abstand zwischen zwei äußeren Punkten entlang des mindestens einen der Vielzahl von Strahlen über der minimalen Wanddicke liegt.

4. Verfahren nach einem vorangehenden Anspruch, wobei mindestens einer der Vielzahl von Duplikatpunkten durch einen Strahl verursacht wird, der auf einen Scheitelpunkt auftrifft.

5. Verfahren nach einem vorangehenden Anspruch, ferner umfassend Handlungen zum Markieren mindestens eines Voxels in der Nähe von mindestens einem anderen sicheren Voxel als sicheres Voxel basierend auf einem Maß der Nähe.

6. Verfahren nach einem vorangehenden Anspruch, ferner umfassend das Drucken einer Darstellung der Vielzahl von als sichere Voxel markierten Voxeln durch einen 3D-Drucker.

7. System zum Drucken eines dreidimensionalen Objekts, wobei das System umfasst:
einen Prozessor (803);
einen Speicher (804), der funktionsfähig mit dem Prozessor verbunden ist, wobei der Speicher Programmanweisungen speichert, die, wenn sie von dem Prozessor ausgeführt werden, eine oder mehrere Komponenten einschließen, die geeignet sind, das Verfahren eines vorangehenden Anspruchs auszuführen.

## Revendications

1. Procédé pour imprimer un objet tridimensionnel (3D) (100, 200, 300), le procédé comprenant des étapes consistant à :
positionner l'objet 3D dans une grille de voxels ;
mouler (402) une pluralité de rayons à travers un modèle de l'objet 3D à imprimer ;
pour chaque rayon, trier (403) une pluralité d'intersections avec l'objet 3D par une distance par rapport à un point de moulage du rayon respectif ;
supprimer (404) la totalité d'une pluralité de points dupliqués de la pluralité d'intersections ;
mémoriser (405) un état d'entrée/sortie pour chacune de la pluralité d'intersections ;
marquer une pluralité de voxels en tant que voxels sûrs où l'épaisseur de paroi déterminée par la pluralité d'intersections atteint ou dépasse une épaisseur de paroi minimale ;
déterminer (503), pour au moins une partie d'une représentation de l'objet 3D, un rapport entre des voxels non-sûrs et un nombre total de voxels dans la au moins une partie de la représentation de l'objet 3D ;
comparer (504) le rapport à une valeur de seuil ; et
déterminer que la partie de la représentation de l'objet 3D ne s'imprimera pas correctement en réponse à l'étape de comparaison.

2. Procédé selon la revendication 1, dans lequel le marquage d'une pluralité de voxels en tant que voxels sûrs comprend des étapes consistant à déterminer si une distance entre deux points extérieurs le long d'au moins l'un de la pluralité de rayons est supérieure à une épaisseur de paroi minimale.

3. Procédé selon la revendication 2, comprenant en outre une étape de marquage d'un voxel extérieur et d'un voxel intérieur adjacent comme étant sûrs si la distance entre deux points extérieurs le long du au moins l'un de la pluralité de rayons est supérieure à l'épaisseur minimale de paroi.

4. Procédé selon l'une quelconque des revendications précédentes, dans lequel au moins l'un de la pluralité de points dupliqués est provoqué par un rayon frappant une intersection de sommet.

5. Procédé selon l'une quelconque des revendications précédentes, comprenant en outre des étapes de marquage d'au moins un voxel à proximité d'au moins un autre voxel sûr en tant que voxel sûr sur la base d'une mesure de la proximité.

6. Procédé selon l'une quelconque des revendications précédentes, comprenant en outre l'impression, par une imprimante 3D, d'une représentation de la pluralité de voxels marqués en tant que voxels sûrs.

7. Système pour imprimer un objet tridimensionnel, le système comprenant :
un processeur (803) ;
une mémoire (804) connectée de manière opérationnelle au processeur, la mémoire stockant des instructions de programme qui, lorsqu'elles sont exécutées par le processeur, comprennent un ou plusieurs composants adaptés pour mettre en oeuvre le procédé selon l'une quelconque des revendications précédentes.
